# EUROPÄISCHE PATENTSCHRIFT

(11) **EP 0 562 403 B1**
(45) Veröffentlichungstag und Bekanntmachung des Hinweises auf die Patenterteilung: **12.06.1996**
(21) Anmeldenummer: 93104166.9
(22) Anmeldetag: 15.03.1993
(51) Int. Cl.: F16B 17/00, F16B 2/14, F16B 9/02

(54) **Halterung einer Achse in einem Gehäuse**
Device for retaining a spindle in a housing
Dispositif de retenue d'un axe dans un boîtier

(30) Priorität: 27.03.1992 DE 4210146
(43) Veröffentlichungstag der Anmeldung: 29.09.1993
(73) Patentinhaber: SIEMENS AKTIENGESELLSCHAFT, D-80333 München (DE)
(72) Erfinder: Schmidt, Roland, Dr., W-8520 Erlangen (DE); Weller, Thomas, Dipl.-Ing. (FH), W-8520 Erlangen (DE); Ströhlein, Hans, Dipl.-Ing. (FH), W-8500 Nürnberg 50 (DE)

(56) Entgegenhaltungen:
- DE-A- 3 724 893
- FR-A- 1 253 895
- FR-A- 2 151 257
- GB-A- 2 226 594
- US-A- 3 173 473
- US-A- 3 560 030
- US-A- 3 569 903

## Beschreibung

Die Erfindung betrifft die Halterung einer Achse in einem Gehäuse, wobei wenigstens ein Ende der Achse mittels eines Halterungsteiles mit dem Gehäuse verbunden ist.

Der Einbau einer derartig gehalterten Achse in das Gehäuse stellt dann kein Problem dar, wenn die Montage unter Sichtkontrolle erfolgen kann. Ist es jedoch aufgrund der Gestaltung des Gehäuses erforderlich, beispielsweise das Ende der Achse in das Halterungsteil einzuführen, so treten Probleme auf. Abgesehen davon, daß es schwierig ist, das Ende der Achse und das Halterungsteil zunächst relativ zueinander derart auszurichten, daß diese im wesentlichen miteinander fluchten, besteht die Gefahr, daß infolge der ungenügenden Möglichkeiten, den Montagevorgang zu kontrollieren, die Teile verkanten und verklemmen, was Beschädigungen des Endes der Achse bzw. des Halterungsteiles nach sich ziehen kann. Die genannten Probleme lassen sich auch bei Verwendung aufwendiger Montagevorrichtungen nur teilweise vermeiden, so daß zur Erleichterung der Montage häufig ein größeres Radialspiel der Achse zugelassen wird, als dies an sich wünschenswert ist.

Der Erfindung liegt die Aufgabe zugrunde, eine Halterung der eingangs genannten Art so auszubilden, daß diese auch ohne Sichtkontrolle problemlos montiert werden kann. Außerdem soll die Voraussetzung für eine radial spielfreie Halterung des Endes der Achse mittels des Halterungsteiles geschaffen werden.

Nach der Erfindung wird diese Aufgabe gelöst durch die Halterung einer Achse in einem Gehäuse, bei der wenigstens ein Ende der Achse mittels eines Halterungsteiles mit dem Gehäuse verbunden ist, wobei das Halterungsteil einen Hülsenabschnitt aufweist, in den das Ende der Achse oder ein Gehäuseansatz bei der Montage mit radialem Spiel einführbar ist, und wobei Spannmittel vorgesehen sind, die am Ende des Montagevorganges den Hülsenabschnitt an dem in den Hülsenabschnitt eingeführten Ende der Achse oder Gehäuseansatz radial zur Anlage bringen. Im Falle der erfindungsgemäßen Halterung liegt also zwischen dem Ende der Achse bzw. dem Gehäuseansatz einerseits und dem Halterungsteil andererseits zu Beginn des Montagevorganges radiales Spiel vor, das aber am Ende des Montagevorganges unter der Wirkung der Spannmittel verringert, vorzugsweise völlig beseitigt wird. Somit gestaltet sich der Montagevorgang im Falle der erfindungsgemäßen Halterung wesentlich einfacher als beim Stand der Technik, da zu Beginn des Montagevorganges ein radiales Spiel vorliegt, das es auch unter ungünstigen Bedingungen, d.h. ohne Sichtkontrolle, ermöglicht, das Ende der Achse bzw. den Gehäuseansatz in den Hülsenabschnitt des Halterungsteiles einzuführen. Außerdem besteht offensichtlich keine Notwendigkeit, ein unerwünscht großes radiales Spiel vorzusehen, da im Bedarfsfalle die Möglichkeit besteht, die Achse ohnes jegliches radiales Spiel zu haltern. Wenn die Rede davon ist, daß die Spannmittel den Hülsenabschnitt am Ende der Achse bzw. dem Gehäuseansatz zur Anlage bringen, so soll dies im vorliegenden Fall sowohl die radial völlig spielfreie Anlage des Hülsenabschnittes an dem Ende der Achse bzw. dem Gehäuseansatz als auch das Vorhandensein eines geringen radialen Spieles, beispielsweise in der Größenordnung von 200 µm, umfassen. Unter einem Gehäuseansatz soll im vorliegenden Fall ein zur Aufnahme in dem Hülsenabschnitt geeignet geformter Ansatz verstanden werden, der in einer solchen Weise mit dem Gehäuse verbunden ist, daß er zur Abstützung der Achse geeignet ist.

In der DE-A-33 25 459 und der DE-U-91 11 611 ist zwar die Halterung einer Achse bzw. eines Abschnittes einer Stange, eines Rohres od.dgl. mittels eines Halterungsteiles beschrieben. Es sind jedoch keine Spannmittel vorgesehen, die einen Hülsenabschnitt des Halterungsteiles an dem jeweiligen zu halternden Teil radial zur Anlage bringen.

In der US-A-3 569 903 ist eine Steckverbindung beschrieben, deren Stecker einen achsartigen Abschnitt aufweist, der mit radialem Spiel in einen Hülsenabschnitt der Kupplung einführbar ist. Auch hier sind jedoch keine Spannmittel vorhanden, die den Hülsenabschnitt an dem achsartigen Abschnitt radial zur Anlage bringen.

Gemäß einer bevorzugten Ausführungsform der Erfindung ist vorgesehen, daß der Hülsenabschnitt radial federnd ausgebildet ist. Mit dieser Maßnahme wird es den Spannmitteln erleichtert, den Hülsenabschnitt am Ende der Achse bzw. dem Gehäuseabschnitt zur Anlage zu bringen. Die radiale Nachgiebigkeit des Hülsenabschnittes läßt sich gemäß Varianten der Erfindung dadurch realisieren, daß der Hülsenabschnitt wenigstens einen axial verlaufenden Einschnitt aufweist oder durch mehrere axial verlaufende Einschnitte in eine Anzahl von Fingern unterteilt ist.

Gemäß einer weiteren besonders bevorzugten Ausführungsform der Erfindung ist vorgesehen, daß die Spannmittel eine an der Achse bzw. dem Gehäuseansatz vorgesehene Schräge aufweisen, welche am Ende des Montagevorganges mit dem Hülsenabschnitt in Eingriff kommt und diesen an dem Ende der Achse bzw. an dem Gehäuseansatz zur Anlage bringt. Auf diese Weise lassen sich die Spannmittel mit geringem Aufwand realisieren. Dabei kann die Schräge sowohl an der Achse bzw. dem Gehäuseansatz selbst ausgebildet sein. Es kann aber auch ein auf die Achse bzw. den Gehäuseansatz aufgesetzter Ring vorgesehen sein, der die Schräge trägt. Letztere Variante ist fertigungstechnisch sehr günstig, da die Schräge an einem separaten Teil ausgebildet und entsprechend leicht herstellbar ist. Aus Gründen der Montagevereinfachung, nicht zuletzt aber auch aus fertigungstechnischen Gründen ist es zweckmäßig, die Schräge ringförmig auszubilden.

Um sicherzustellen, daß am Ende des Montagevorganges, wenn der Hülsenabschnitt an dem Ende der Achse bzw. an dem Gehäuseansatz zur Anlage gebracht wird, die auszuübenden Kräfte nicht unnötig groß sind, ist gemäß einer Variante vorgesehen, daß der mit der Schräge in Eingriff kommende Bereich des Hülsenabschnittes entsprechend angeschrägt ist.

Um Fertigungstoleranzen in axialer Richtung ausgleichen zu können, weist das Halterungsteil gemäß einer Variante der Erfindung einen axial federnden Bereich auf, der vorzugsweise durch wenigstens einen tellerfederartigen Abschnitt gebildet ist.

Gemäß einer bevorzugten Ausführungsform der Erfindung ist vorgesehen, daß es sich bei der Achse um die Achse einer Drehanode und bei dem Gehäuse um das Vakuumgehäuse einer Röntgenröhre handelt.

Ausführungsbeispiele der Erfindung sind in den beigefügten Zeichnungen dargestellt. Es zeigen:
- Fig. 1: in schematischer Darstellung einen Längsschnitt durch eine Röntgenröhre mit einer Drehanode, deren Achse in erfindungsgemäßer Weise in dem Vakuumgehäuse der Röntgenröhre gelagert ist,
- Fig. 2: in vergrößerter Darstellung die Einzelheit A gemäß Fig. 1,
- Fig. 3: die in Fig. 2 dargestellte Einzelheit vor dem vollständigen Abschluß des Montagevorganges,
- Fig. 4: in zu Fig. 2 analoger Darstellung ein zweites Ausführungsbeispiel, und
- Fig. 5 und 6: in zu den Fig. 2 und 4 analoger Weise weitere Ausführungsbeispiele.

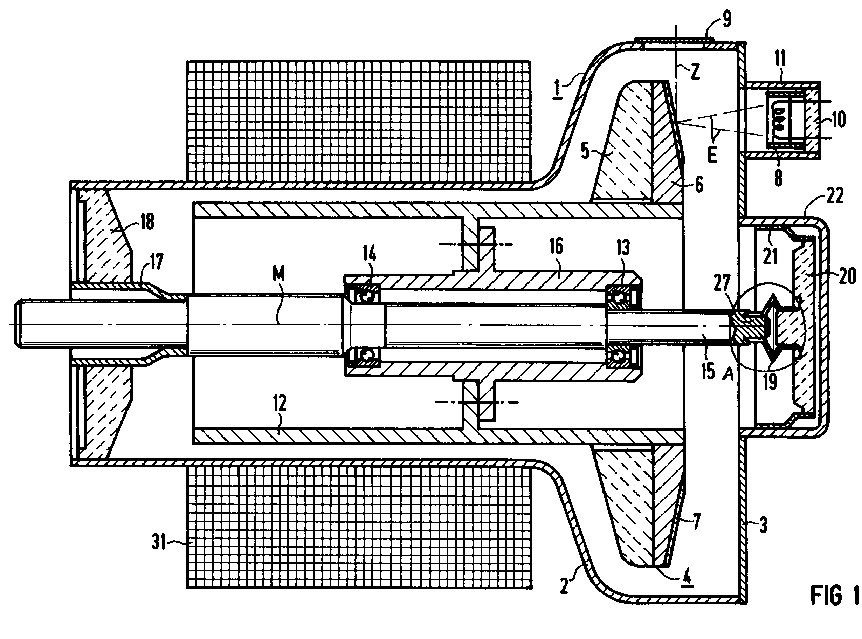

Die Drehanoden-Röntgenröhre gemäß Fig. 1 weist ein im wesentlichen metallisches Vakuumgehäuse 1 auf. Dieses weist als Hauptbestandteile zwei metallische Gehäuseteile 2 und 3 auf. Das Gehäuseteil 2 ist trichterförmig und im wesentlichen rotationssymmetrisch zur Mittelachse M des Röntgenröhre ausgebildet. An seinem größeren Ende ist es mittels des im wesentlichen kreisscheibenförmigen Gehäuseteiles 3 verschlossen. Die beiden Gehäuseteile 2 und 3 sind vakuumdicht miteinander verbunden, z.B. durch Löten. Im Bereich des größeren Durchmessers des Gehäuseteiles 2 befindet sich im Inneren des Vakuumgehäuses 1 der Anodenteller 4 der Drehanode der Röntgenröhre. Dieser ist in an sich bekannter Weise aus einem Graphitkörper 5 und einem Metallkörper 6, welcher aus hochschmelzendem Material besteht und im wesentlichen Wolfram enthält, zusammengesetzt. Der Metallkörper 6 ist mit einer Beschichtung 7 versehen, die in an sich bekannter Weise aus einer Wolfram-Rhenium-Legierung besteht. Auf die Beschichtung 7 trifft ein von der Glühkathode 8 der Röntgenröhre ausgehender Elektronenstrahl E auf. Das hierdurch erzeugte Röntgenstrahlenbündel, von dem nur der Zentralstrahl Z in Fig. 1 eingetragen ist, tritt durch ein Strahlenaustrittsfenster 9 aus dem Vakuumgehäuse 1 aus. Das beispielsweise aus Berrylium gebildete Strahlenaustrittsfenster 9 ist im Bereich des größeren Durchmessers des Gehäuseteiles 2 angebracht und mit diesem in an sich bekannter Weise durch Löten vakuumdicht verbunden.

Die Glühkathode 8 ist mittels eines Isolators 10 in einem rohrförmigen, metallischen Gehäuseteil 11 gehaltert und in dem Fokussierungsschlitz eines schematisch angedeuteten Kathodenbechers aufgenommen. Das Gehäuseteil 11 verschließt eine Öffnung entsprechenden Durchmessers des Gehäuseteiles 3 vakuumdicht, wobei die Gehäuseteile 3 und 11 beispielsweise durch Löten miteinander verbunden sind. Es versteht sich, daß auch der Isolator 10 vakuumdicht in das Gehäuseteil 11 eingesetzt und mit diesem beispielsweise in an sich bekannter Weise durch Löten verbunden ist.

Der ringförmige Anodenteller 4 ist mit einem rohrförmigen metallischen Rotor 12 drehfest verbunden, beispielsweise durch eine Lötung. Der Anodenteller 4 und der Rotor 12 sind rotationssymmetrisch zu der Mittelachse M der Röntgenröhre ausgebildet und in noch näher zu beschreibender Weise drehbar in dem Vakuumgehäuse 1 gelagert. Zum Antrieb des Rotors 12 und des Anodentellers 4 ist auf die Außenseite des Gehäuseteiles 2 im Bereich von dessen kleinerem Durchmesser ein in Fig. 1 schematisch angedeuteter Stator 31 aufgesetzt, der in an sich bekannter Weise zusammen mit dem Rotor 12 einen elektrischen Kurzschlußläufermotor zum Antrieb des Anodentellers 4 bildet.

Die Lagerung des Anodentellers 4 und des Rotors 7 erfolgt mittels zweier Wälzlager 13 und 14, die den Anodenteller 4 und den Rotor 12 auf einer feststehenden Achse 15, deren Mittelachse mit der Mittelachse M der Röntgenröhre übereinstimmt, abstützen. Zwischen dem Rotor 12 und den Außenringen der Wälzlager 13 und 14 ist eine Lagerhülse 16 angeordnet, die einen radial auswärts gerichteten Flansch aufweist, der an einem entsprechendenen radial einwärts gerichteten Flansch des Rotors 12 anliegt. Die Lagerhülse 16 und der Rotor 12 sind im Bereich ihrer Flansche mit Hilfe von Schrauben, es sind in Fig. 1 die Mittellinien zweier Schrauben strichliert angedeutet, miteinander verbunden.

Das von dem Anodenteller 4 entfernte Ende der Achse 15 ist in einer Blechhülse 17 aufgenommen, die sich über einen Isolator 18 in der Bohrung des den kleineren Durchmesser aufweisenden Abschnittes des Gehäuseteiles 2 abstützt. Es versteht sich, daß die Achse 15 mit der Blechhülse 17, die Blechhülse 17 mit dem Isolator 18 und der Isolator 18 mit dem Gehäuseteil 2 vakuumdicht, beispielsweise durch Löten, verbunden sind.

Das zylindrische andere Ende 27 der Achse 15 stützt sich über ein Halterungsteil 19 an einem Isolator 20 ab, der sich seinerseits über einen metallischen Zwischenring 21 in der Bohrung eines napfförmigen Gehäuseteiles 22 abstützt. Der Isolator 20 ist mit dem Zwischenring 21 axial unverschieblich verbunden. Seinerseits ist der Zwischenring 21 mit dem Gehäuseteil 22 axial unverschieblich verbunden. Die Verbindung des Isolators 20 mit dem Zwischenring 21 und die Verbindung des Zwischenringes 21 mit dem Gehäuseteil 22 kann jeweils durch Löten erfolgen. Das Gehäuseteil 22 ist in eine entsprechende zentrische Bohrung des Gehäuseteiles 3 eingesetzt und mit diesem vakuumdicht verbunden, beispielsweise durch Löten.

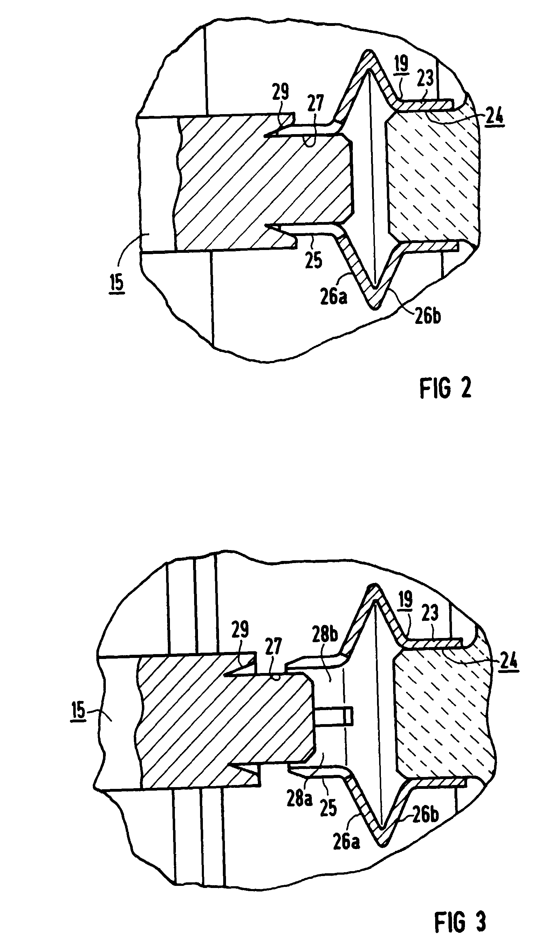

Das Halterungsteil 19 ist als im wesentlichen rotationssymmetrisches Blechformteil ausgeführt. Es weist gemäß Fig. 2 und 3 einen ersten Hülsenabschnitt 23 auf, mit dem es auf einen zylindrischen Gehäuseansatz 24, nämlich einen Ansatz des Isolators 20, radial spielfrei aufgesetzt ist. Das Halterungsteil 19 ist mit seinem ersten Hülsenabschnitt 23 auf dem Gehäuseansatz 24 axial unverschieblich fixiert, beispielsweise durch Löten.

Außerdem weist das Halterungsteil 19 einen zweiten Hülsenabschnitt 25 auf, in den beim Zusammenbau der Röntgenröhre das zylindrische Ende 27 der Achse 15 eingeführt wird. Um Fertigungstoleranzen in axialer Richtung ausgleichen zu können, sind der erste und der zweite Hülsenabschnitt 23 und 25 des Halterungsteiles 19 durch zwei tellerfederartige Abschnitte 26a und 26b miteinander verbunden.

Bei der Fertigung der beschriebenen Röntgenröhre wird so vorgegangen, daß als letzter Arbeitsgang vor dem Evakuieren des Vakuumgehäuses 1 das Gehäuseteil 3 auf das Gehäuseteil 2 aufgesetzt und mit diesem vakuumdicht verlötet wird. Beim Aufsetzen des Gehäuseteiles 3 muß das Ende 27 der Achse 15 in den zweiten Hülsenabschnitt 25 des an dem Gehäuseansatz 24 fixierten Halterungsteiles 19 eingeführt werden. Dies ist offensichtlich schwierig, da es ohne ausreichende Sichtkontrolle erfolgen muß. Um die hiermit verbundenen Probleme vermeiden zu können, ist der zweite Hülsenabschnitt 25 des Halterungsteiles 19 derart ausgebildet, daß das Ende 27 der Achse 15 zunächst mit radialem Spiel in den zweiten Hülsenabschnitt 25 einführbar ist. Hierzu weist der zweite Hülsenabschnitt 25 vor dem vollständigen Einführen der Achse 15 die in Fig. 3 dargestellte, sich leicht in Richtung auf den Anodenteller 4 konisch erweiternde Gestalt auf.

Um den Hülsenabschnitt 25 in der erforderlichen Weise am Ende des Montagevorganges spielfrei an dem Ende 27 der Achse 15 zur Anlage bringen zu können, ist der zweite Hülsenabschnitt 25 radial federnd ausgebildet, und zwar dadurch, daß er mit mehreren, im Falle des beschriebenen Ausführungsbeispieles insgesamt vier gleichmäßig über seinen Umfang verteilten axial verlaufenden Einschnitten versehen ist, die ihn in eine der Anzahl der Einschnitte entsprechende Anzahl von Fingern unterteilen, von denen in Fig. 3 die Finger 28a und 28b sichtbar sind.

Um den zweiten Hülsenabschnitt 25 bzw dessen Finger in der erwähnten Weise radial spielfrei an dem Ende 27 der Achse 15 zur Anlage bringen zu können, sind Spannmittel in Form einer ringförmigen Schräge 29 am Ende der Achse 15 vorgesehen. Die sich in Richtung auf den zweiten Hülsenabschnitt 25 erweiternde Schräge ist derart plaziert, daß sie, kurz bevor das Gehäuseteil 3 an dem Gehäuseteil 2 zur Anlage kommt, mit dem freien Ende des zweiten Hülsenabschnittes 25 bzw. dessen Fingern in Eingriff kommt und diesen bzw. diese radial einwärts verformt und somit an dem Ende der Achse 15 zur Ablage bringt.

Um eine spielfreie Anlage des Hülsenabschnittes 25 an dem Ende 27 der Achse 15 zu gewährleisten, ist die Schräge 29 genauer gesagt derart plaziert, daß auch unter Berücksichtigung der ungünstigsten Fertigungstoleranzen sichergestellt ist, daß die spielfreie Anlage des zweiten Hülsenabschnittes 25 an dem Ende der Achse 15 gegeben ist, bevor das Gehäuseteil 3 an dem Gehäuseteil 2 anliegt. Die vollständige Anlage des Gehäuseteiles 3 an dem Gehäuseteil 2 wird dann unter Verformung der tellerfederartigen Abschnitte 26a und 26b des Halterungsteiles 19 hergestellt. Es wird also deutlich, daß auch bei ungünstiger Lage der Fertigungstoleranzen der beteiligten Bauteile eine spielfreie Anlage des zweiten Hülsenabschnittes 25 an dem Ende 27 der Achse 15 gewährleistet ist.

Um diejenigen Kräfte zu verringern, die bei der Montage erforderlich sind, um den zweiten Hülsenabschnitt 25 an dem Ende 27 der Achse 15 radial spielfrei zur Anlage zu bringen, ist der zweite Hülsenabschnitt 25 an seinem Ende bzw. sind die Finger des zweiten Hülsenabschnittes 25 an ihren Enden der Schräge 29 entsprechend angeschrägt. Es besteht jedoch auch die Möglichkeit statt der Anschrägung eine Abrundung vorzusehen.

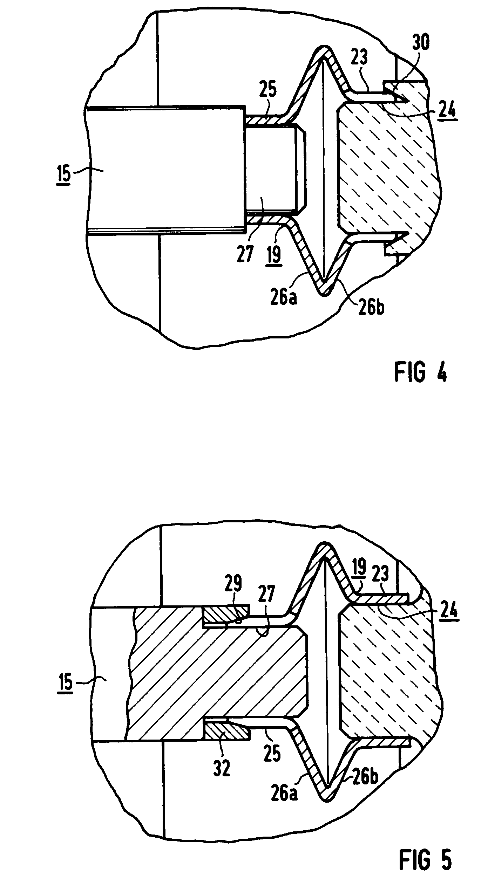

Die in Fig. 4 dargestellte Ausführungsform stimmt mit der zuvor beschriebenen in einer Reihe von Punkten überein, weshalb gleiche oder ähnliche Elemente die gleichen Bezugszeichen tragen.

Im Gegensatz zu der zuvor beschriebenen Ausführungsform ist im Falle der Ausführungsform gemäß Fig. 4 das Halterungsteil 19 mit seinem zweiten Hülsenabschnitt 25 axial unverschieblich mit dem Ende der Achse 15 verbunden. Statt des zweiten Hülsenabschnittes 25 ist der erste Hülsenabschnitt 23 durch Einschnitte in Finger unterteilt und analog zu dem Hülsenabschnitt 25 im Falle des zuvor beschriebenen Ausführungsbeispieles so ausgebildet, daß der Gehäuseansatz 24 zunächst spielfrei in den ersten Hülsenabschnitt 23 eingeführt werden kann. Erst am Ende des Montagevorganges wird der erste Hülsenabschnitt 23 radial spielfrei an dem Gehäuseansatz 24 zur Anlage gebracht, und zwar mittels einer an dem Gehäuseansatz 24 vorgesehenen Schräge 30. Dabei wirken die Schräge 30 und der erste Hülsenabschnitt 23 in der Weise zusammen, wie dies zuvor für die Schräge 29 und den zweiten Hülsenabschnitt 25 beschrieben wurde. Im Unterschied zu der zuvor beschriebenen Ausführungsform ist der erste Hülsenabschnitt 23 an seinem freien Ende nicht angeschrägt, sondern abgerundet.

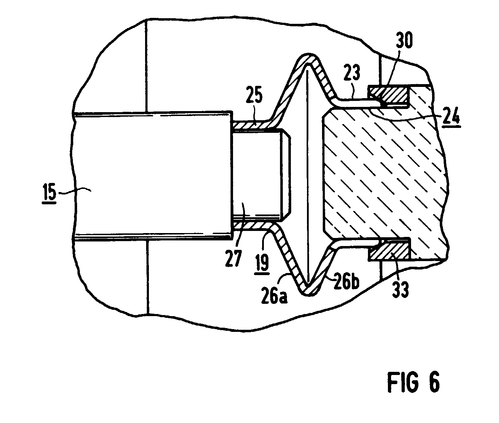

Die Ausführungsbeispiele gemäß den Fig. 5 und 6 unterscheiden sich von dem Ausführungsbeispiel gemäß den Fig. 1 bis 3 bzw. dem Ausführungsbeispiel gemäß Fig. 4 dadurch, daß die Schräge 29 bzw. 30 nicht an der Achse 15 bzw. dem Gehäuseansatz 24 selbst ausgebildet ist, sondern ein Ring 32 bzw. 33 auf die Achse 15 bzw. den Gehäuseansatz 24 aufgesetzt ist, der die Schräge 29 bzw. 30 aufweist. Wie die Fig. 5 und 6 zeigen, kann der Ring 32 bzw. 33 in fertigungstechnisch günstiger Weise mit radialem Spiel auf die Achse 15 bzw. dem Gehäuseansatz 24 aufgesetzt werden. Die radial spielfreie Anlage des Hülsenabschnittes 25 bzw. 23 an der Achse 15 bzw. dem Gehäuseansatz 24 ist dennoch gewährleistet. Außerdem zentriert sich der Ring 32 bzw. 33 am Ende des Montagevorganges selbsttätig relativ zu der Achse 15 bzw. dem Gehäuseansatz 24.

Obwohl im Falle der Ausführungsbeispiele vorgesehen ist, daß der Hülsenabschnitt 25 an dem Ende 27 der Achse 15 bzw. der Hülsenabschnitt 23 an dem Gehäuseansatz 24 radial spielfrei zur Anlage gebracht wird, besteht natürlich auch die Möglichkeit, hier ein geringes Spiel vorzusehen.

Im Falle der beschriebenen Ausführungsbeispiele findet die erfindungsgemäße Halterung in einer Röntgenröhre Verwendung. Es handelt sich hierbei um eine bevorzugte Verwendung. Andere Verwendungen der erfindungsgemäßen Halterung sind überall dort möglich, wo eine ähnlich problematische Situation vorliegt.

## Patentansprüche

1. Halterung einer Achse (15) in einem Gehäuse (1), wobei wenigstens ein Ende der Achse (15) mittels eines Halterungsteiles (19) mit dem Gehäuse (1) verbunden ist, wobei das Halterungsteil (19) einen Hülsenabschnitt (25; 23) aufweist, in den das Ende der Achse (15) oder ein Gehäuseansatz (24) bei der Montage mit radialem Spiel einführbar ist, und wobei Spannmittel (29; 30) vorgesehen sind, die am Ende des Montagevorganges den Hülsenabschnitt (25; 23) an dem in den Hülsenabschnitt (25, 23) eingeführten Ende der Achse (15) oder Gehäuseansatz (24) radial zur Anlage bringen.

2. Halterung nach Anspruch 1, **dadurch gekennzeichnet,** daß der Hülsenabschnitt (25; 23) radial federnd ausgebildet ist.

3. Halterung nach Anspruch 1 oder 2, **dadurch gekennzeichnet,** daß der Hülsenabschnitt (25; 23) wenigstens einen axial verlaufenden Einschnitt aufweist.

4. Halterung nach Anspruch 3, **dadurch gekennzeichnet,** daß der Hülsenabschnitt (25; 23) durch mehrere axial verlaufende Einschnitte in eine Anzahl von Fingern (28a, 28b) unterteilt ist.

5. Halterung nach einem der Ansprüche 1 bis 4, **dadurch gekennzeichnet,** daß die Spannmittel eine an der Achse (15) bzw. dem Gehäuseansatz (24) vorgesehene Schräge (29; 30) aufweisen, welche am Ende des Montagevorganges mit dem Hülsenabschnitt (25; 23) in Eingriff kommt und diesen an dem Ende der Achse (15) bzw. an dem Gehäuseansatz (24) zur Anlage bringt.

6. Halterung nach Anspruch 5, **dadurch gekennzeichnet,** daß die Schräge (29; 30) an der Achse (15) bzw. an dem Gehäuseansatz (24) selbst ausgebildet ist.

7. Halterung nach Anspruch 5, **dadurch gekennzeichnet,** daß ein auf die Achse (15) bzw. den Gehäuseansatz (24) aufgesetzter Ring (32, 33) vorgesehen ist, der die Schräge (2; 30) aufweist.

8. Halterung nach einem der Ansprüche 5 bis 7, **dadurch gekennzeichnet,** daß die Schräge (29; 30) ringförmig ausgebildet ist.

9. Halterung nach einem der Ansprüche 5 bis 8, **dadurch gekennzeichnet,** daß der mit der Schräge (29; 30) in Eingriff kommende Bereich des Hülsenabschnittes (25; 23) entsprechend abgerundet oder angeschrägt ist.

10. Halterung nach einem der Ansprüche 1 bis 9, **dadurch gekennzeichnet,** daß das Halterungsteil (19) einen axial federnden Bereich (26a, 26b) aufweist.

11. Halterung nach Anspruch 10, **dadurch gekennzeichnet,** daß der axial federnde Bereich durch wenigstens einen tellerfederartigen Abschnitt (26a, 26b) gebildet ist.

12. Halterung nach einem der Ansprüche 1 bis 11, **dadurch gekennzeichnet,** daß es sich bei der Achse um die Achse (15) einer Drehanode (4, 12) und bei dem Gehäuse um das Vakuumgehäuse (1) einer Röntgenröhre handelt.

## Claims

1. Support of an axle (15) in a housing (1), with at least one end of the axle (15) being connected by means of a support part (19) to the housing (1), with the support part (19) having a sleeve section (25; 23), into which the end of the axle (15) or a housing attachment (24) can be inserted with radial clearance during assembly, and with chucking equipment (29; 30) being provided, which at the end of the assembly procedure brings the sleeve section (25; 23) into radial contact with the end of the axle (15) which is inserted into the sleeve section (25; 23) or with the housing attachment (24).

2. Support according to claim 1, characterized in that the sleeve section (25; 23) is formed in a radially resilient manner.

3. Support according to claim 1 or 2, characterized in that the sleeve section (25; 23) has at least one axially extending indentation.

4. Support according to claim 3, characterized in that the sleeve section (25; 23) is divided into a number of fingers (28a, 28b) by several axially extending indentations.

5. Support according to one of claims 1 to 4, characterized in that the chucking equipment has a bevel (29; 30) provided on the axle (15) or the housing attachment (24), which bevel at the end of the assembly procedure engages with the sleeve section (25; 23) and brings it into contact with the end of the axle (15) or with the housing attachment (24).

6. Support according to claim 5, characterized in that the bevel (29; 30) is formed at the axle (15) or at the housing attachment (24) itself.

7. Support according to claim 5, characterized in that a ring (32, 33) attached to the axle (15) or the housing attachment (24) is provided, which ring has the bevel (2; 30).

8. Support according to one of claims 5 to 7, characterized in that the bevel (29; 30) is formed in the shape of a ring.

9. Support according to one of claims 5 to 8, characterized in that the region of the sleeve section (25; 23) engaging with the bevel (29; 30) is appropriately rounded or bevelled.

10. Support according to one of claims 1 to 9, characterized in that the support part (19) has an axially resilient region (26a, 26b).

11. Support according to claim 10, characterized in that the axially resilient region is formed by at least one cup-spring-like section (26a, 26b).

12. Support according to one of claims 1 to 11, characterized in that the axle is the axle (15) of a rotary anode (4, 12) and the housing is the vacuum housing (1) of an X-ray tube.

## Revendications

1. Dispositif de fixation d'un axe (15) dans un boîtier (1), au moins une extrémité de l'axe (15) étant reliée au boîtier (1) au moyen d'une pièce (19) de fixation, la pièce (19) de fixation comportant un tronçon (25; 23) formant douille, dans lequel l'extrémité de l'axe (15) ou une saillie (24) du boîtier peut être introduite avec jeu radial lors du montage et il est prévu des moyens (29;30) de serrage, qui font s'appliquer de manière radiale, à la fin de l'opération de montage, le tronçon (25;23) formant douille à l'extrémité de l'axe (15) ou à la saillie (24) du boîtier, introduite dans le tronçon (25;23) formant douille.

2. Dispositif de fixation suivant la revendication 1, caractérisé en ce que le tronçon (25;23) formant douille est formé de sorte à être élastique radialement.

3. Dispositif de fixation suivant la revendication 1 ou 2, caractérisé en ce que le tronçon (25;23) formant douille comporte au moins une découpe s'étendant axialement.

4. Dispositif de fixation suivant la revendication 3, caractérisé en ce que le tronçon (25;23) formant douille est subdivisé par plusieurs découpes s'étendant axialement en une pluralité de doigts (28a,28b).

5. Dispositif de fixation suivant l'une des revendications 1 à 4, caractérisé en ce que les moyens de serrage comportent un biseau (29;30), qui est prévu sur l'axe (15) ou sur la saillie (24) du boîtier, qui vient en prise, à la fin de l'opération de montage, avec le tronçon (25;23) formant douille et le fait s'appliquer à l'extrémité de l'axe (15) ou à la saillie (24) du boîtier.

6. Dispositif de fixation suivant la revendication 5, caractérisé en ce que le biseau (29;30) est formé sur l'axe (15) ou sur la saillie (24) du boîtier elle-même.

7. Dispositif de fixation suivant la revendication 5, caractérisé en ce qu'il est prévu un anneau (32,33), qui est mis en place sur l'axe (15) ou sur la saillie (24) du boîtier et qui comporte le biseau (29;30).

8. Dispositif de fixation suivant l'une des revendications 5 à 7, caractérisé en ce que le biseau (29;30) a une forme annulaire.

9. Dispositif de fixation suivant l'une des revendications 5 à 8, caractérisé en ce que la zone du tronçon (25;23) formant douille, qui vient en prise avec le biseau, (29;30) est arrondie ou biseautée de manière correspondante.

10. Dispositif de fixation suivant l'une des revendications 1 à 9, caractérisé en ce que la pièce (19) de fixation comporte une zone (26a, 26b) élastique axialement.

11. Dispositif de fixation suivant la revendication 10, caractérisé en ce que la zone élastique axialement est formée d'au moins un tronçon (26a,26b) du type ressort à disques.

12. Dispositif de fixation suivant l'une des revendications 1 à 11, caractérisé en ce que l'axe est l'axe (15) d'une anode tournante (4,12) et le boîtier est le boîtier (1) sous vide d'un tube à rayon X.
